# EUROPEAN PATENT APPLICATION

(11) **EP 4 497 529 A1**
(43) Date of publication of application: **29.01.2025**
(21) Application number: 24177318.3
(22) Date of filing: 22.05.2024
(51) Int. Cl.: B23K 37/00, B23K 9/16, B23K 9/32, B23K 37/02

(54) **ROTATING POWER CONNECTOR FOR WELDING TORCH CABLES**

(30) Priority: 25.05.2023 US 202363468886 P; 09.05.2024 US 202418659553
(71) Applicant: Illinois Tool Works Inc., Glenview IL 60025 (US)
(72) Inventor: LIZOTTE, Ryan, Glenview, 60025 (US)
(74) Representative: HGF

(57) **Abstract**

A rotating power connection for connecting an electrical supply power cable to an electric welding torch body is provided. An example rotating power connector for an electric welding torch includes a housing, a socket arranged within the housing at a first end of the housing and configured to receive a welding torch neck, a connector extending from a second end of the housing and rotatably coupled to the socket, the connector configured to be secured to a welding cable, and one or more electrical contacts arranged within the housing and positioned between the socket and the connector, the one or more electrical contacts providing an electrical connection between the socket and the connector during rotation of the connector with respect to the socket.

## Description

### RELATED APPLICATIONS

This application claims priority to Provisional Application No. 63/468,886 filed May 25, 2023, which is incorporated herein by reference in its entirety.

### FIELD OF THE DISCLOSURE

**This** disclosure relates generally to robotic welding and more particularly, to rotating power connectors for welding cables and welding torch systems

### BACKGROUND

**A** welding torch and welding power cable are typically used to perform arc welding. Typically, the power cable provides current, shielding gas, and electrode wire to the welding torch and includes two fixed connections: one end of the power cable is fastened to a wire feeder by way of a mating pin (or power pin), and the other end is fastened to a torch body with a gooseneck or conductor tube of the welding torch. The welding torch typically has various electrical connection points at the contact tip, diffuser/retaining head, nozzle, neck, liner, front module, power pin, etc.

### SUMMARY

These and other features and advantages of the disclosure will be more fully understood from the following detailed description of the disclosure taken together with the accompanying drawings.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example robotic welding system, in accordance with aspects of this disclosure.
FIG. 2 illustrates a schematic diagram of an example rotating power connector that may be used to implement the robotic welding system of FIG. 1.
FIG. 3 illustrates a perspective view of an example implementation of the rotating power connector of FIG. 2.
FIG. 4 illustrates a sectional view of the example rotating power connector of FIG. 3, in accordance with aspects of this disclosure.
FIG. 5 illustrates a cross-sectional perspective view of the example rotating power connector of FIG. 2 inserted into an example housing.
FIG. 6 illustrates a sectional view of the example rotating power connector of FIG. 2 secured into the housing of FIG. 5.
FIG. 7 illustrates a sectional view of another example rotating power connector that may be used to implement the robotic welding system of FIG. 1.
FIG. 8 is a flowchart illustrating an example method that may be performed to replace a welding cable having the example rotating power connector of FIG. 2.

The figures are not necessarily to scale. Where appropriate, similar or identical reference numbers are used to refer to similar or identical components.

### DETAILED DESCRIPTION

This disclosure relates to electric welding generally, and more particularly to rotating power connectors for connecting a welding power cable to a welding torch. In particular, example rotating power connectors are disclosed that may be affixed to a welding torch neck or gooseneck. Disclosed example rotating power connectors reduce strain or stress on cabling by providing a connection between the welding power cable and a rotatable the torch neck that allows for rotation of the welding torch relative to the power cable, while also providing continual electrical connection at high current levels employed in welding applications.

During manipulation of the torch by a user or a robot, the welding power cable twists as the torch is turned. This can be problematic as the welding power cable is subjected to mechanical wear, and can cause failure of the unicable. For example, when the welding power cable is twisted at a bended contour, the stress of the twisting concentrates at one end, and causes mechanical failure of the welding power cable. In addition, the connection points of the welding torch create resistance along the electrical path, which can affecting a welding arc and create additional spatter at the torch nozzle.

Replacing a power cable requires downtime and removing various connectors in in order access the power cable. In addition, removing the various connectors during the welding power cable replacement can cause a tool center point of the welding torch to change.

**The** present disclosure provides a rotating power connection that may be secured directly to a torch neck. The present disclosure advantageously allows for rotation of the welding torch neck and the welding power cable relative to each other without breaking electrical contact or putting unnecessary strain on the unicable. The rotating power connector also reduces the number of connections points along the power cable, thereby reducing spatter. The present disclosure also advantageously allows a more simple replacement of the welding power cable that does not modify the tool center point of the welding torch.

By utilizing a power cable that includes a socket with a spring-loaded connector, the number of parts needed at the front of the welding torch can be reduced, thereby reducing the number of connections and having the welding torch neck be electrically connected directly to the welding power cable. The welding torch neck interfaces directly with the socketed rotating power connector (RPC), reducing overall resistance of the system, the number of parts required, as well as reducing spatter and simplifying troubleshooting efforts.

For example, with the socketed rotating power connector, fewer parts are needed, and a direct 'neck to cable' connection is created. Additionally, a uniform housing portion may be utilized across many robot makes/models. Because there are less connection points and therefore less electrical resistance, there is a more stable arc and therefore less spatter. In addition, a more simple system means that the tool center point is not changed after replacing the welding power cable.

In some examples, the welding torch is mounted on a robotic arm of a robotic welding system, and the rotating power connector allows the torch body to rotate with the axis of rotation of the robotic arm without substantial twisting of the welding power cable, thereby mitigating torque and/or reducing mechanical wear on the welding power cable. In some examples, the rotating power connector secures the welding power cable to the welding torch neck and allows for a faster replacement process for welding cables. In some examples, the rotating power connector reduces the number of electrical connections between the welding torch and the feeder, thereby reducing resistance in the welding circuit and producing a more stable arc with less spatter generation.

Disclosed example rotating power connectors for electric welding torches include: a housing; a socket arranged within the housing at a first end of the housing and configured to receive a welding torch neck; a connector extending from a second end of the housing and rotatably coupled to the socket, the connector configured to be secured to a welding cable; and one or more electrical contacts arranged within the housing and positioned between the socket and the connector, the one or more electrical contacts providing an electrical connection between the socket and the connector during rotation of the connector or the welding torch neck with respect to the socket.

In some example rotating power connectors, the housing comprises an electrical insulator. In some example rotating power connectors, the housing comprises a fastening feature around an outer circumference of the housing. In some example rotating power connectors, the welding torch neck is configured to slide into and out of the socket and form an electrical contact with the socket in a first position. In some example rotating power connectors, the socket comprises spring-loaded contacts biased toward a longitudinal axis of the socket. In some example rotating power connectors, the socket is configured to deliver electrical current and shielding gas to the welding torch neck. In some example rotating power connectors, the socket and the connector comprise a current pathway from the welding power cable at the second end and the welding torch neck at the first end.

Some example rotating power connectors further comprise a spring contact connection to provide electrical contact between the socket and the connector. Some example rotating power connectors further comprise a crimp connector configured to secure the connector to the welding power cable. Some example rotating power connectors further comprise a bearing within the housing to rotatably couple the socket and the connector. Some example rotating power connectors further comprise a bearing within the housing arranged at the first end and configured to support the welding torch neck, the welding torch neck being rotatably connected at the first end with respect to the socket. Some example rotating power connectors further comprise a separate mechanical connection between the welding power cable and the welding torch neck.

Disclosed example robotic welding systems include: a robotic arm; a welding cable; a wire feeder; a welding torch neck attached to the robotic arm; and a rotating power connector between the welding power cable and the welding torch neck to provide an electrical connection and shielding gas from the welding power cable to the welding torch neck, the rotating power connector including: a housing; a socket arranged within the housing at a first end of the housing, the socket configured to receive the welding torch neck; a connector extending from a second end of the housing and rotatably coupled to the socket, the connector configured to be secured to the welding power cable; and one or more electrical contacts arranged within the housing and positioned between the socket and the connector, the one or more electrical contacts providing an electrical connection between the socket and the connector during rotation of the connector or the welding torch neck with respect to the socket.

In some example robotic welding systems, the welding power cable remains neutral during welding. Some example robotic welding systems further include a separate mechanical connection between the welding power cable and the welding torch neck. In some example robotic welding systems, the housing comprises a fastening feature around an outer circumference of the housing.

Some example robotic welding systems further include a connector housing, wherein the connector housing comprises one or more fasteners to engage the fastening feature of the housing.

Some example robotic welding systems further include a connector housing, wherein the connector housing comprises one or more fasteners to engage a fastening feature of the welding torch neck.

As used herein, the terms "first" and "second" may be used to enumerate different components or elements of the same type, and do not necessarily imply any particular order.

As used herein, the words "exemplary" and "example" mean "serving as an example, instance, or illustration." The examples described herein are not limiting, but rather are exemplary only. It should be understood that the described examples are not necessarily to be construed as preferred or advantageous over other examples. Moreover, the terms "examples of the invention," "examples," or "invention" do not require that all examples of the invention include the discussed feature, advantage, or mode of operation.

The term "welding-type system," as used herein, includes any device capable of supplying power suitable for welding, plasma cutting, induction heating, Carbon Arc Cutting-Air (e.g., CAC-A), and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "torch," "welding torch," "welding tool" or "welding-type tool" refers to a device configured to be manipulated to perform a welding-related task, and can include a hand-held welding torch, robotic welding torch, gun, gouging tool, cutting tool, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW, e.g., TIG), shielded metal arc welding (SMAW), spray, short circuit, CAC-A, gouging process, cutting process, and/or any other type of welding process.

As used herein, the term "welding program" or "weld program" includes at least a set of welding parameters for controlling a weld. A welding program may further include other software, algorithms, processes, or other logic to control one or more welding-type devices to perform a weld.

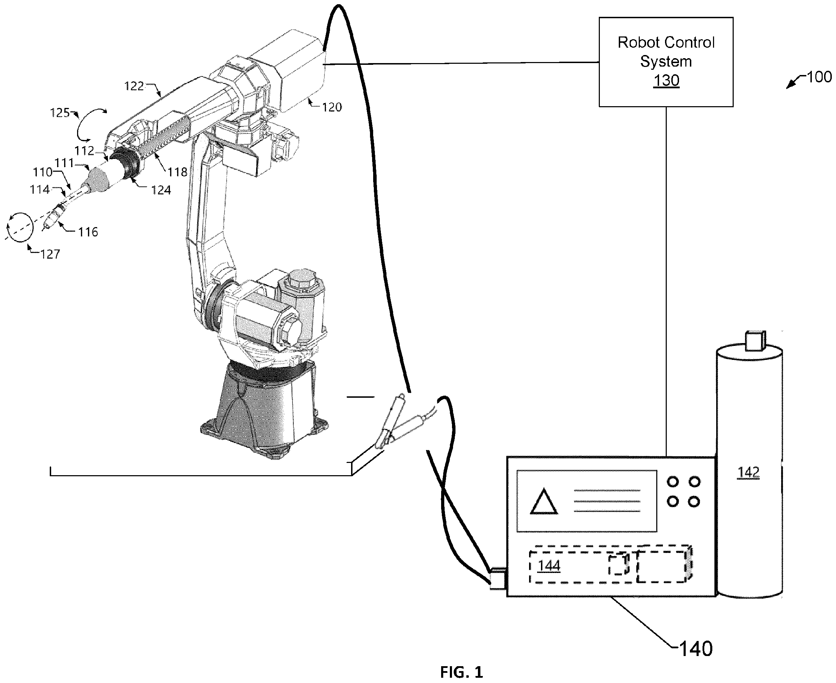

FIG. 1 illustrates an example robotic welding system 100, in accordance with aspects of this disclosure. A welding torch 110 (e.g., a gas metal arc welding (GMAW) torch, a metal inert gas (MIG) torch, etc.) is comprised of a torch body having a connector housing 111, a clutch 112, a welding torch neck 114, and a nozzle assembly 116 (which may include contact tip, gas diffuser, gas nozzle, and other components). A welding power cable 118 connects to the welding torch 110 and/or power supply 140 to deliver wire, gas 142, and electrical power to the welding torch 110. The shielding gas 142, electrical current, and a consumable electrode (e.g., a welding wire) are channeled through the welding torch 110 to output a welding arc at the nozzle assembly 116. As described in more detail below, a rotating power connector is arranged within the connector housing 111 and the clutch 112, providing paths for electrical conduction, fluid conduction, and/or wire guidance between the welding power cable 118 and the welding torch neck 114.

The welding power cable 118 may include one or more of a core tube (e.g., to conduct gas and/or welding wire), copper cabling (e.g., to conduct welding-type current), and/or shielded lead wires (e.g., to communicate sensor measurements, current, and/or other signaling between the torch and a control device), as a non-limiting list of examples. The welding power cable 118 may be connected to a wire feeder 120 opposite the welding torch 110. The welding torch neck 114 is inserted into a forward end of the connector housing 111 and allows for the communication of the consumable electrode, the shielding gas, and/or the welding current to the nozzle assembly 116 mounted on the welding torch neck 114. The welding torch 110 is coaxially mounted to a robotic arm 122 such that the welding power cable 118 is arranged along substantially the center axis of the robotic arm 122. However, the welding torch 110 may be mounted to a robotic arm in a disposition other than a coaxially mounted disposition. In some examples, the robotic arm 122 is configured to rotate the welding torch 110 bidirectionally about an axis 125, as well as rotate bidirectionally about the center axis 127 of the robotic arm 122. For instance, a robotic manipulator 124 is employed to control movement of the welding torch 110 in one or more directions using a joint of the robot.

The wire feeder 120 feeds the welding wire through the welding power cable 118, clutch 112, connector housing 111, welding torch neck 114, and through an opening in the contact tip of the nozzle assembly 116 at the forward end of the welding torch 110. The welding wire, when energized for welding, carries an electrical potential. When the welding wire arcs with metal workpieces, an electrical circuit is completed and current flows through the welding wire, across the arc to metal workpieces and to a ground or other type of current return. The arc causes the welding wire and the metal of the workpieces to melt, thereby joining the workpieces as the melt solidifies.

The example robotic welding system 100 is configured to form a weld using any known electric welding techniques. Example electric welding techniques include shielded metal arc welding (SMAW), MIG, flux-cored arc welding (FCAW), TIG, laser welding, sub-arc welding (SAW), stud welding, and resistance welding. In some examples, the power supply 140 and/or other welding equipment are configured to support one or more, but fewer than all, types of welding processes. To change welding processes, the power supply 140, welding torch 110, and/or other welding equipment may be removed (e.g., disconnected and moved away from the robotic welding system 100) and replaced by a different welding-type power supply, torch, and/or other welding equipment that supports the desired welding process. Additionally or alternatively, multiple different types of welding equipment (e.g., multiple power supplies having different capabilities, multiple torches, etc.) may be co-located (e.g., proximate to the robotic manipulator 124, on a rack of equipment, etc.) to enable rapid reconfiguration of the robotic welding system 100. In some examples, the connector housing 111 and/or the clutch 112 are compatible with multiple different types of welding torches (e.g., different makes and/or models). In some other examples, the connector housing 111 and/or the clutch 112 are replaceable with other versions to match a particular type, make, and/or model of welding torch to a particular type, make, and/or model of robotic arm.

The example robotic manipulator 124 and/or the example robot control system 130 are configured to transmit commands, requests, data, and/or other messages and/or communications to the power supply 140 via one or more protocols. The robotic manipulator 124 and/or the robot control system 130 are further configured to receive responses, acknowledgments, data, and/or other messages and/or communications from the power supply 140 via the one or more protocols. Based on a robotic welding procedure, the robotic manipulator 124 and/or the robot control system 130 may communicate parameters to the power supply 140 for configuration according to the robotic welding procedure, and/or adjust the welding-type process based on the variables and/or other data obtained from the power supply 140 while performing welding operations. In addition to communication with the power supply 140, the robotic manipulator 124, and/or the robot control system 130, the power supply 140, the robotic manipulator 124, and/or the robot control system 130 may communicate with other welding equipment (e.g., a welding accessory, such as the wire feeder 120, a shielding gas supply valve, a welding wire preheating system, a fume extraction system) and/or other robotic equipment.

In some examples, the power supply 140 directly supplies input power to the welding torch 110. In the illustrated example, the power supply 140 is configured to supply power to welding operations and/or preheating operations. The example power supply 140 may also provide power to a wire feeder to supply electrode wire to the welding torch 110 for various welding applications (e.g., GMAWwelding, flux core arc welding (FCAW)). The power supply 140 includes a controller 144 to control the operation of the power supply 140. The controller 144 may also include interface circuitry for communicating data to other devices in the system, such as the wire feeder 120, the robotic manipulator 124, and/or the robot control system 130. For example, in some situations, power supply 140 wirelessly communicates with other welding devices within the welding system. Further, in some situations, the power supply 140 communicates with other welding devices using a wired connection, such as by using a network interface controller (NIC) to communicate data via a network (e.g., ETHERNET, 10baseT, 10base100, etc.).

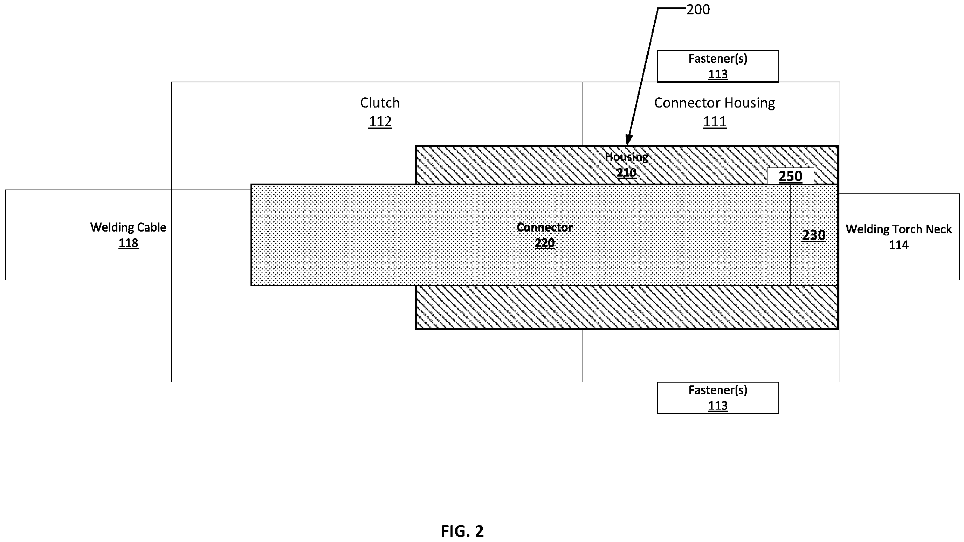

FIG. 2 illustrates a schematic diagram of an example rotating power connector that may be used to implement the robotic welding system of FIG. 1. In some examples, the welding torch neck 114 is connected to the welding power cable 118 via the rotating power connector 200. In some examples, the rotating power connector 200 is inserted into a hollow clutch 112 and a connector housing 111. The clutch 112 and the connector housing 111 are used to mechanically secure the rotating power connector 200 to the robotic arm 122. In some examples, the hollow clutch 112 and the connector housing are made of electrically insulating material, such as a plastic or similar, thereby shielding the outside of the rotating power connector 200 from short-circuiting to external components and/or devices (e.g., the robotic arm 122). The hollow clutch 112 and the connector housing 111 facilitate mounting the welding torch neck 114 and maintain the tool center point of the welding torch 110 described in FIG 1. In some examples, the connector housing 111 is compatible with multiple different types of welding torches (e.g., different makes and/or models). In some other examples, the connector housing 111 and/or the clutch 112 are replaceable with other versions to match a particular type, make, and/or model of welding torch to a particular type, make, and/or model of robotic arm. In some examples, the clutch 112 and the connector housing 111 rotate with the welding robotic arm.

In some examples, the connector housing 111 may include one or more fasteners 113 external to the connector housing 111 and configured to engage the rotating power connector 200, which is described in further detail below. In some examples, the fasteners 113 may be cam-type fasteners (e.g., cam levers, cam clamps, cam locks), clamp handles, clamp levers, spring catches, latches, quick-release fasteners, etc., which eliminate the need for tools when removing and/or replacing the welding power cable 118.

In some examples, the rotating power connector 200 includes an enclosure 210, a connector 220, an interface 230, and a coupler 240. In some examples, the connector 220 is attached to the interface 230 at one end and the coupler 240 at an opposite end. In some examples, the interface 230 is integrated into the enclosure 210 at one end of the connector 220 to receive the welding torch neck 114. The connector 220 is rotatably coupled to the interface 230. In some examples, a bearing 250 is arranged within the enclosure 210 to rotatably couple the connector 220 and the interface 230, and the connector 220 is secured to a welding power cable 118 with a coupler 240.

In some examples, the rotating power connector 200 includes one or more electrical contacts arranged within the enclosure 210 to provide an electrical connection between the welding torch neck 114 and the connector 220 during rotation of the connector 220 with respect to the interface 230. The interface 230 and the connector 220 comprise a current pathway from the welding power cable 118 to the welding torch neck 114. Once mated with the welding power cable 118, one or more power conductors connect directly to the connector 220. For instance, the connector 220 is arranged to conduct power to the welding torch neck 114 towards the nozzle assembly 116. In some examples, a spring contact connection provides electrical contact between the interface 230 and the connector 220.

When employed with the welding torch 110, the rotating power connector 200 allows the welding power cable 118 to rotate relative to the enclosure 210, the clutch 112, the connector housing 111, the welding torch neck 114, and the welding torch 110 described in FIG. 1. The rotatable movement of the welding power cable 118 provides relief to the otherwise rigid connection through the welding torch 110, significantly reducing the amount of stress on, and extending the useful life of, the welding power cable 118. The rotating power connector 200 also allows for the efficient passage of one or more of electrical current, welding wire, and/or shielding gas from the welding power cable 118 to the nozzle assembly 116.

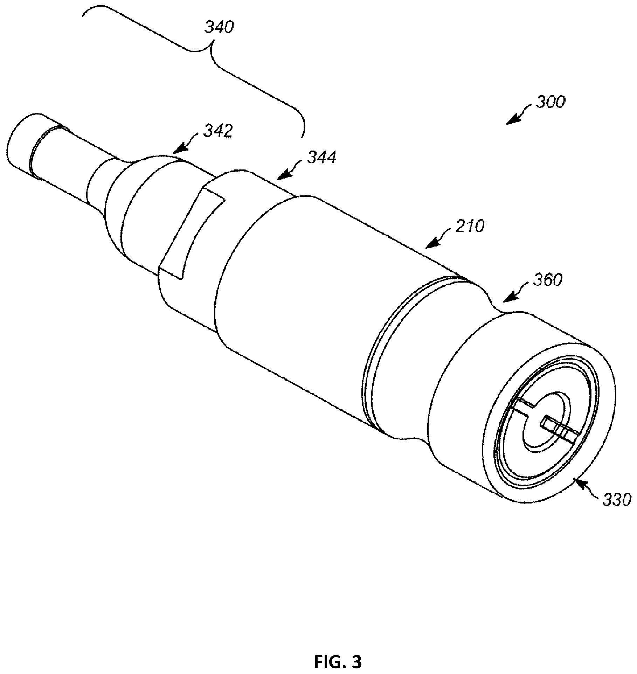

FIG. 3 illustrates a perspective view of an example implementation of the rotating power connector of FIG. 2. In some examples, the interface described above with reference to FIG. 2 is a socket interface 330 configured to receive a welding torch neck 114. In some examples, the socket interface 330 is an electrical spring loaded socket. The enclosure 210 is configured with the socket interface 330 at one end and a coupler 340 at an opposite end. The enclosure 210 of the rotating power connector 300 is an electrical insulator and made of an electrically insulating material. The enclosure 210 may include one or more fastening features 360, such as a groove, channel, or other type of fastening/latching mechanism around an outer circumference of the enclosure 210 to secure the rotating power connector 300. When the fasteners 113 are in an engaged position, the fasteners 113 are engaging the fastening feature 360 of the rotating power connector 200 in order to retain the rotating power connector 200 within the connector housing 111. In some examples, when the fasteners are in a disengaged position, the rotating power connector 200 may maintain an electrical path with the welding torch neck 114 until the rotating power connector 200 is separated from the welding torch neck 114 (e.g., by an operator).

In the disclosed example of FIG. 3, the welding torch neck 114 is configured to slide into and out of the socket interface 330, and forms an electrical connection with the socket interface 330. A surface surrounding a bore of the socket includes spring-loaded contacts which are biased toward a longitudinal axis of the socket interface 330. In some examples, the spring-loaded contacts are separated by gaps, such that the socket interface 330 is configured to deliver electrical current and shielding gas to the welding torch neck 114.

In some examples, the coupler 340 is configured with a crimp connector 342. In some examples, the crimp connector 342 may be any type of coupler that provides a radial force to secure the welding power cable to the connector 220 (e.g., a crimped-style fitting, a compression fitting, a threaded compression fitting, etc.) described above in FIG. 2. As shown, the crimp connector 342 is secured to the enclosure 210 via a connection 344, such as a thread and set screw connection, but may also include a press-fit, knurled press-fit, snap-fit, screws, bolts, adhesive, a weld, braze, or other type of fastener. Additionally or alternatively, the conductors of the welding power cable 118 may be ultrasonically welded, or otherwise bonded, to the connector 220. Conductive wires (e.g., copper wires) of the welding power cable 118 are crimped to form a solid electric connection between the welding power cable 118 and the crimp connector 342.

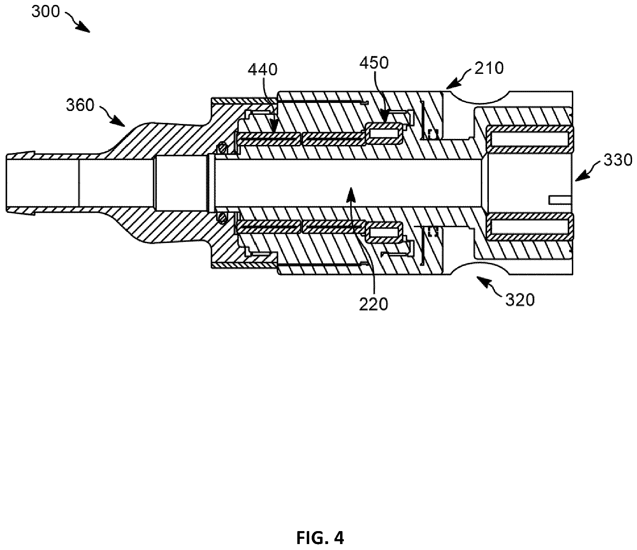

FIG. 4 illustrates a sectional view of the example rotating power connector of FIG. 3, in accordance with aspects of this disclosure. With reference to Fig. 4, the welding torch neck 114 described above with reference to FIG. 1, is configured to plug into the socket interface 330 (e.g., by insertion of the rotating power connector 300 over the welding torch neck 114 or insertion of the welding torch neck 114 into the rotating power connector 300), thereby connecting the welding power cable 118 to the nozzle assembly 116 of the welding torch 110.

**The** enclosure 210 includes a connector 220 as described above with reference to FIG. 2. In some examples, the enclosure 210 also includes one or more electrical contact rings 440 placed inside the enclosure 210 and surrounding the connector 220. In some examples, one or more bearings 450 are employed, such as arranged about the connector 220 and bracketing the one or more electrical contact rings 440. The one or more bearings 450 provide mechanical stability while allowing rotation of the connector 220. In some examples, the one or more bearings 450 may be a needle roller bearing, or any other type of bearing that allows rotation of the connector while providing alignment and/or preventing side loading (e.g., deviation from the axial direction).

The connector 220 and/or the coupler 360 extend from an end of the rotating power connector 300 (opposite the socket interface 330) and connect to the welding power cable 118. When employed with the welding torch 110, the rotating power connector 300 allows the welding power cable 118 to rotate relative to the housing 410.

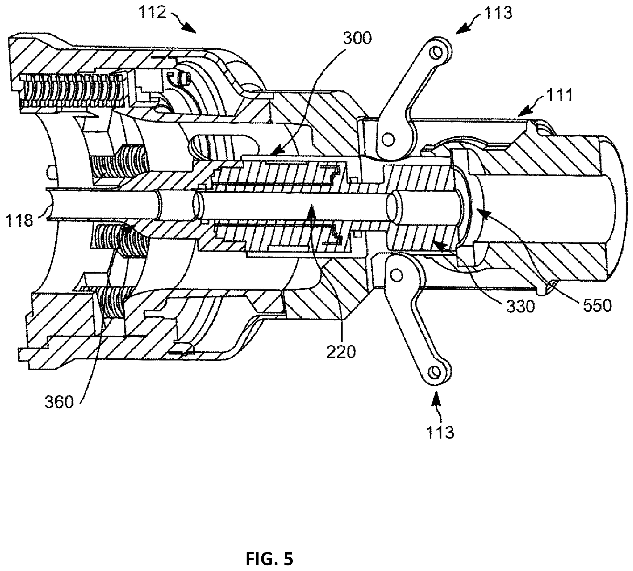

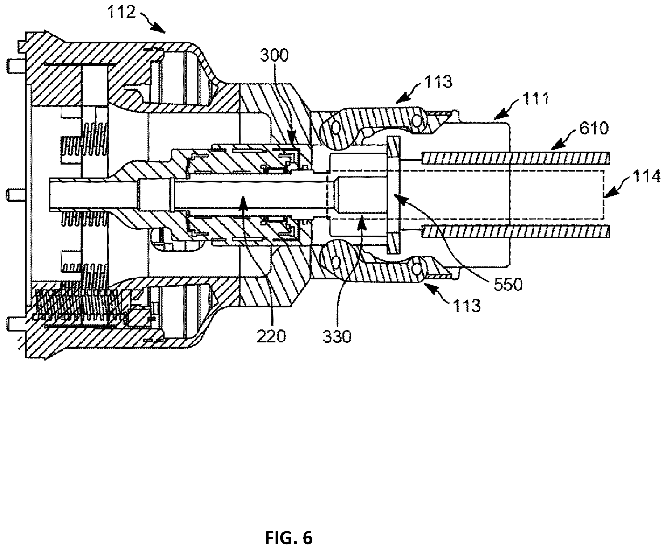

FIG. 5 illustrates a cross-sectional perspective view of the example rotating power connector of FIG. 2 inserted into an example housing. FIG. 6 illustrates a sectional view of the example rotating power connector of FIG. 2 secured into the housing of FIG. 5. In some examples, the welding power cable 118 described in FIG. 1 may need to be removed from the connector housing 111 and/or replaced. In order to be replaced, the rotating power connector 300 that is connected to the welding power cable 118 via the coupler 360 is also removed. The rotating power connector 300 is retained by the connector housing 111 using fasteners 113. In some examples, the fasteners 113 are cam-type fasteners such as the fasteners depicted in FIG. 5, and can also be (e.g., cam levers, cam clamps, cam locks), clamp handles, clamp levers, spring catches, latches, quick-release fasteners, etc., which allow for tool less removal and replacement of the clutch 112 and the connector housing 111 when replacing the welding power cable 118. In some examples, the fastening feature 360 may be a groove, channel, guide, and/or other type of fastening or latching feature.

In some examples, when the fasteners 113 are in an engaged/locked position, the fasteners 113 are engaging the fastening feature 360 of the rotating power connector 300 in order to retain the rotating power connector 300 within the connector housing 111. In order to remove the rotating power connector 300, the fasteners 113 on the connector housing 111 that are employed to retain the rotating power connector 300 are disengaged. The disengaging of the fasteners 113 allows the rotating power connector 300 to be removed along with the welding power cable 118. In some examples, when the fasteners 113 are disengaged but the rotating power connector 300 is not yet removed, the rotating power connector 300 continues to make electrical contact, and the electrical pathway between the welding torch neck 114 and the welding power cable 118 is still active.

In some examples, the fasteners 113 may be released by pulling one end of the one or more fasteners 113 away from the connector housing 111. The pulling in turn causes the rotating power connector to disengage from the fastening feature 360 of the rotating power connector 300, thereby releasing the rotating power connector from the engaged/locked position.

Referring to FIG. 6, after replacement of the welding power cable, the rotating power connector 300 may be inserted into the clutch 112 and the connector housing 111. The connector housing 111 may be fastened after the rotating power connector 300 makes electrical contact with the welding torch neck 114. In some examples, the welding torch neck 114 is a copper or other conductive tube that is inserted into the socket interface 330 of the rotating power connector 300. Once connected, the rotating power connector 300 and the welding torch neck 114 form an electrical connection, thereby allowing the rotating power connector 300 to transfer power directly to the welding torch neck 114.

In some examples, the welding torch neck 114 is surrounded by an insulator 610. The insulator 610 prevents electrical conductivity outside of the welding torch neck 114 and allows power to flow directly from the rotating power connector 300 through the welding torch neck 114 and to the nozzle assembly 116. In some examples, a seal 550 is located at a perimeter of the socket interface 330 in order to prevent gas from leaking. The seal 550 may be an O-ring, washer or similar seal arranged at the opening of the socket interface 330 to prevent shielding gas from leaking. The seal 550 may provide a resistive force on the rotating power connector 200 when the rotating power connector 200 is locked into place by the fasteners 113.

In some examples, when the welding torch neck 114 is inserted into the socket interface 330, the welding torch neck 114 makes electrical contact with the rotating power connector. In some examples, the rotating power connector 300 may be further secured by locking the fasteners 113 external to the connector housing 111. Locking or engaging the fasteners 113 retains the rotating power connector 200 in the connector housing 111 by engaging the fastening feature(s) 320 of the rotating power connector as described in FIG. 3. When the fasteners 113 are engaged, the welding torch neck 114 and the rotating power connector 300 may be locked in place and unable to be disconnected from each other. When the fasteners are engaged, the housing 111 and clutch 112 may not be removed. In some examples, the fasteners 113 is engaged by pushing one end of the one or more fasteners 113 towards the connector housing, thereby retaining the rotating power connector 300 in place. The pushing in turn causes the second portion to engage a groove in the enclosure 210, thereby retaining the rotating power connector 300 in place. The rotating power connector 300 provides pressure onto the sealing element when the rotating power connector 300 is secured.

In some examples, visual indicators are provided on the connector housing 111, the rotating power connector 300, and/or the clutch 112 to inform an operator that the rotating power connector is fully seated and/or retained in the connector housing 111, thereby indicating that a welding operation may resume or commence. The visual indicators may be light emitting diodes, a marking, or other indicators that inform the operator that the fasteners 313 are completely secured and/or locked in place. In some examples, the visual indicators can convey information based on a color, lettering, or other indications depending on whether the welding power cable is properly installed. For example, the visual indicators can appear red, green, or other colors to provide visual information to the operator.

In some other examples, the indicators are one or more sensor(s) that provide feedback to the controller 144 of the power supply 140 and/or the robot control system 130 informing the controller 144 and/or the robot control system 130 whether the welding power cable is properly installed. Welding may not be allowed when the fasteners are not completely secured and engaging the fastening feature 360 of the rotating power connector 200. If the welding power cable is not installed properly, the weld circuit remains open and a weld fault/arc fault occurs. The one or more sensors may be located in the welding torch 110, at the nozzle assembly 116, contact tip, etc. In some examples, the sensor(s) may be a voltage sensor, a current sensor, etc.

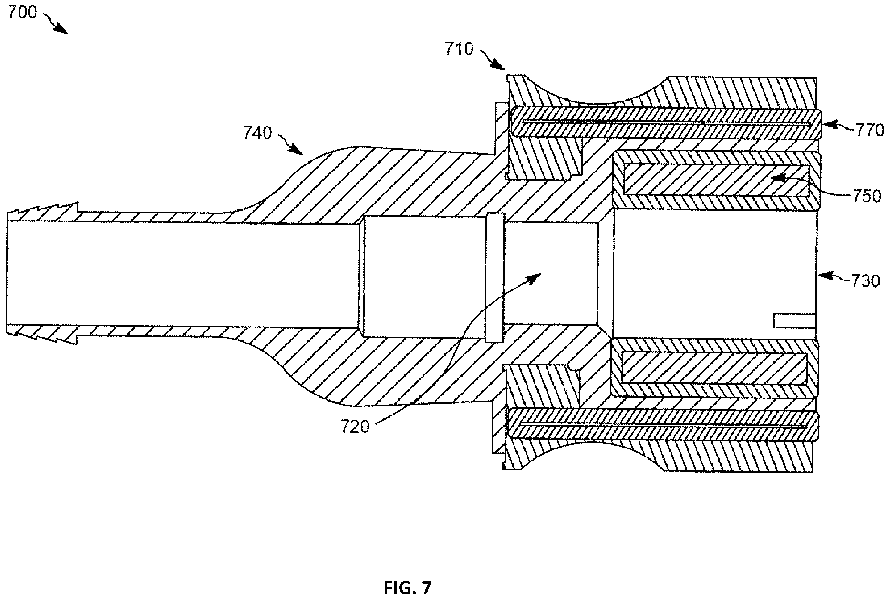

FIG. 7 illustrates a sectional view of another example rotating power connector 700 that may be used to implement the robotic welding system of FIG. 1. In some examples, the rotating power connector 700 includes a housing 710, a connector 720, an interface 730, and a coupler 740. The connector 720 is attached to the interface 730 at one end and the coupler 740 at an opposite end. The coupler 740 may be used to secure the connector 720 to a welding power cable. The interface 730 is integrated into the housing 710 at one end of the connector 720 to receive the welding torch neck 114 and may be a socket interface. The connector 720 is rotatably coupled to the interface 730. In some examples, a bearing 770 is arranged within the housing 710 to rotatably couple the connector 720 and the interface 730.

In some examples, the rotating power connector 700 includes one or more electrical contacts 750 arranged within the housing 710 to provide an electrical connection between the welding torch neck 114 and the connector 220. In some examples, the interface 730 and the connector 720 comprise a current pathway from the welding power cable 118 to the welding torch neck 114. In some examples, once mated with a welding power cable 118, one or more power conductors connect directly to the connector 720. For instance, the connector 720 is arranged to conduct power to the welding torch neck 114 towards a contact tip in the nozzle assembly 116. In some examples, the spring contact connection provides electrical contact between the interface 730 and the connector 720. In some examples, the welding torch neck includes a mechanical interface such as a connector that secures the welding torch neck 114 while allowing the welding torch neck to rotate during welding. In some other examples, the welding torch neck includes a fastening feature such as a groove, channel, or other type of fastening/latching mechanism around an outer circumference of the welding torch neck 114 or a mechanical feature attached to the welding torch neck 114.

In some examples, the welding torch neck 114 is connected to the welding power cable 118 via the rotating power connector 700. The rotating power connector 700 may be inserted in a hollow clutch 112 and a connector housing 111 which may be used to mechanically secure the rotating power connector 200 to the robotic arm 122. The connector housing 111 may include one or more fasteners 113 external to the connector housing 111 and configured to engage a fastening feature 760 of the rotating power connector 700. In some examples, the welding torch neck 114 rotates while the interface 730 remains fixed.

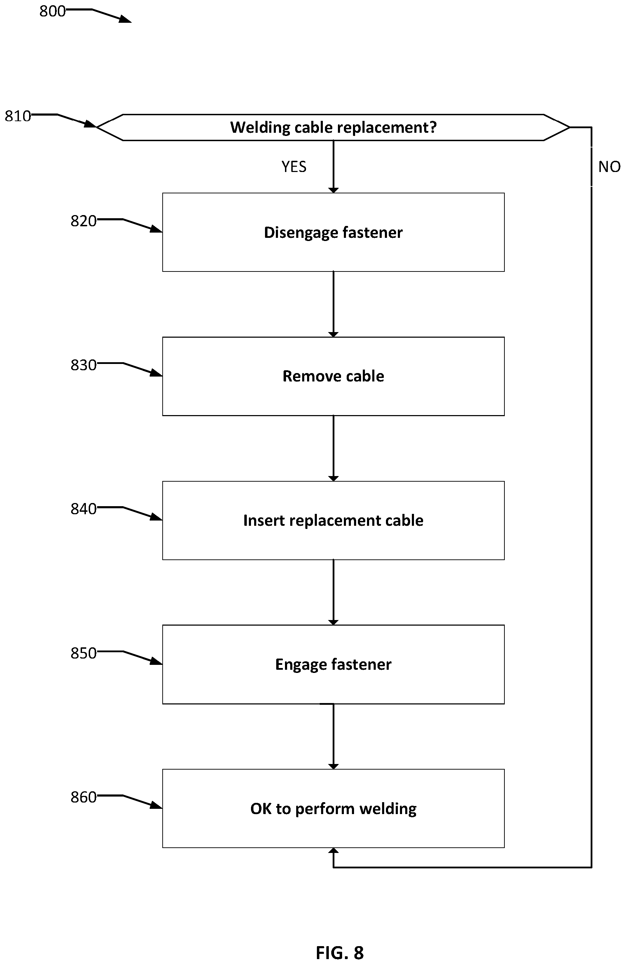

FIG. 8 is a flowchart 800 illustrating an example method that may be performed to replace a welding cable having the example rotating power connector of FIG. 2. In some examples, when a welding cable replacement is needed (block 810), the one or more fasteners are disengaged (block 820) in order to open/unlock the one or more fasteners 113. The fasteners are disengaged by pulling an end of the fasteners, causing the fasteners to disengage a fastening feature of the rotating power cable. The welding power cable 118 is then removed (block 830) by pulling the welding power cable from the back of the welding torch, along with the rotating power connector 300. In some examples, the rotating power connector 300 (and/or one or more components therein) is a replaceable component that can be discarded and replaced with another rotating power connector by loosening the fasteners, separating the welding power cable 118 from the rotating power connector 300, and attaching a new rotating power connector to the welding power cable 118. In some examples, when the useful life of the rotating power connector 300 has ended, the entire assembly of the welding power cable 118 and rotating power connector 300 is discarded and replaced in order to replace the rotating power connector 300.

The replacement welding power cable with the rotating power connector 300 is inserted into the clutch 112 and the connector housing 111 and the rotating power connector 300 receives the welding torch neck 114, which is inserted into the interface 330 of the enclosure 210 of the rotating power connector 300 (block 840). The rotating power connector 210 is inserted into the clutch 112 and the housing 111 at an end opposite the welding torch neck 114 by placing an axial force on the rotating power connector 210 until the rotating power connector 210 is stopped by the seal 550. The fastener may place an additional force on the rotating power connector 300 to bias the rotating power connector towards the opening where the welding torch neck 114 is received. The welding torch neck 114 is inserted into the interface 330 of the rotating power connector 300 and makes electrical contact with the rotating power connector.

Next, the fasteners 113 are engaged (block 850). The rotating power connector 210 is secured by locking the fasteners, and the welding torch neck 114 and the rotating power connector 210 may be locked in place and unable to be disconnected from each other. The system is now ready to perform welding (block 860).

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents. Certain embodiments of the invention are described in the following clauses:
Clause 1. A rotating power connector for an electric welding torch comprising:
   a housing;
   a socket arranged within the housing at a first end of the housing and configured to receive a welding torch neck;
   a connector extending from a second end of the housing and rotatably coupled to the socket, the connector configured to be secured to a welding cable; and
   one or more electrical contacts arranged within the housing and positioned between the socket and the connector, the one or more electrical contacts providing an electrical connection between the socket and the connector during rotation of the connector or the welding torch neck with respect to the socket.
Clause 2. The rotating power connector of clause 1, wherein the housing comprises an electrical insulator.
Clause 3. The rotating power connector of clause 1, wherein the housing comprises a fastening feature around an outer circumference of the housing.
Clause 4. The rotating power connector of clause 1, wherein the welding torch neck is configured to slide into and out of the socket and form an electrical contact with the socket in a first position.
Clause 5. The rotating power connector of clause 1, wherein the socket comprises spring-loaded contacts biased toward a longitudinal axis of the socket.
Clause 6. The rotating power connector of clause 1, wherein the socket is configured to deliver electrical current and shielding gas to the welding torch neck.
Clause 7. The rotating power connector of clause 1, wherein the socket and the connector comprise a current pathway from the welding power cable at the second end and the welding torch neck at the first end.
Clause 8. The rotating power connector of clause 1, further comprising a spring contact connection to provide electrical contact between the socket and the connector.
Clause 9. The rotating power connector of clause 1, further comprising a crimp connector configured to secure the connector to the welding power cable.
Clause 10. The rotating power connector of clause 1, further comprising a bearing within the housing to rotatably couple the socket and the connector.
Clause 11. The rotating power connector of clause 1, further comprising a bearing within the housing arranged at the first end and configured to support the welding torch neck, the welding torch neck being rotatably connected at the first end with respect to the socket.
Clause 12. A robotic welding system comprising:
   a robotic arm;
   a welding cable;
   a wire feeder;
   a welding torch neck attached to the robotic arm; and
   a rotating power connector between the welding power cable and the welding torch neck to provide an electrical connection and shielding gas from the welding power cable to the welding torch neck, the rotating power connector comprising:
      a housing;
      a socket arranged within the housing at a first end of the housing, the socket configured to receive the welding torch neck;
      a connector extending from a second end of the housing and rotatably coupled to the socket, the connector configured to be secured to the welding power cable; and
      one or more electrical contacts arranged within the housing and positioned between the socket and the connector, the one or more electrical contacts providing an electrical connection between the socket and the connector during rotation of the connector or the welding torch neck with respect to the socket.
Clause 13. The robotic welding system of clause 12, wherein the welding power cable remains neutral during welding.
Clause 14. The robotic welding system of clause 12, further comprising a separate mechanical connection between the robotic arm and the welding torch neck.
Clause 15. The robotic welding system of clause 12, wherein the housing comprises a fastening feature around an outer circumference of the housing.
Clause 16. The robotic welding system of clause 15, further comprising a connector housing, wherein the connector housing comprises one or more fasteners to engage the fastening feature of the housing.
Clause 17. The robotic welding system of clause 15, further comprising a connector housing, wherein the connector housing comprises one or more fasteners to engage a mechanical feature of the welding torch neck.

## Claims

1. A rotating power connector for an electric welding torch comprising:
a housing;
a socket arranged within the housing at a first end of the housing and configured to receive a welding torch neck;
a connector extending from a second end of the housing and rotatably coupled to the socket, the connector configured to be secured to a welding cable; and
one or more electrical contacts arranged within the housing and positioned between the socket and the connector, the one or more electrical contacts providing an electrical connection between the socket and the connector during rotation of the connector or the welding torch neck with respect to the socket.

2. The rotating power connector of claim 1, wherein the housing comprises an electrical insulator.

3. The rotating power connector of claim 1, wherein the housing comprises a fastening feature around an outer circumference of the housing.

4. The rotating power connector of claim 1, wherein the welding torch neck is configured to slide into and out of the socket and form an electrical contact with the socket in a first position.

5. The rotating power connector of claim 1, wherein the socket comprises spring-loaded contacts biased toward a longitudinal axis of the socket.

6. The rotating power connector of claim 1, wherein the socket is configured to deliver electrical current and shielding gas to the welding torch neck.

7. The rotating power connector of claim 1, wherein the socket and the connector comprise a current pathway from the welding power cable at the second end and the welding torch neck at the first end.

8. The rotating power connector of claim 1, further comprising a spring contact connection to provide electrical contact between the socket and the connector.

9. The rotating power connector of claim 1, further comprising a crimp connector configured to secure the connector to the welding power cable, or wherein the rotating power connector further comprises a bearing within the housing to rotatably couple the socket and the connector.

10. The rotating power connector of claim 1, further comprising a bearing within the housing arranged at the first end and configured to support the welding torch neck, the welding torch neck being rotatably connected at the first end with respect to the socket.

11. A robotic welding system comprising:
a robotic arm;
a welding cable;
a wire feeder;
a welding torch neck attached to the robotic arm; and
a rotating power connector between the welding power cable and the welding torch neck to provide an electrical connection and shielding gas from the welding power cable to the welding torch neck, the rotating power connector comprising:
a housing;
a socket arranged within the housing at a first end of the housing, the socket configured to receive the welding torch neck;
a connector extending from a second end of the housing and rotatably coupled to the socket, the connector configured to be secured to the welding power cable; and
one or more electrical contacts arranged within the housing and positioned between the socket and the connector, the one or more electrical contacts providing an electrical connection between the socket and the connector during rotation of the connector or the welding torch neck with respect to the socket.

12. The robotic welding system of claim 11, wherein the welding power cable remains neutral during welding.

13. The robotic welding system of claim 11, further comprising a separate mechanical connection between the robotic arm and the welding torch neck.

14. The robotic welding system of claim 11, wherein the housing comprises a fastening feature around an outer circumference of the housing.

15. The robotic welding system of claim 14, further comprising a connector housing, wherein the connector housing comprises one or more fasteners to engage the fastening feature of the housing, or wherein the connector housing comprises one or more fasteners to engage a mechanical feature of the welding torch neck.
